# NEW EUROPEAN PATENT SPECIFICATION

(11) **EP 0 256 875 B2**
(45) Date of publication and mention of the opposition decision: **08.05.1996**
(45) Mention of the grant of the patent: 16.10.1991
(21) Application number: 87307244.1
(22) Date of filing: 17.08.1987
(51) Int. Cl.: C10G 11/05, B01J 29/08

(54) **Cracking catalyst, its preparation and use**
Krackkatalysator, seine Herstellung und seine Anwendung
Catalyseur de craquage, sa préparation et son application

(30) Priority: 15.08.1986 US 897000; 07.10.1986 US 916258
(43) Date of publication of application: 24.02.1988
(73) Proprietor: MOBIL OIL CORPORATION, Fairfax, Virginia 22037-0001 (US)
(72) Inventor: Bundens, Robert Glenn, Mullica Hill New Jersey 08062 (US); Herbst, Joseph Anthony, Turnersville New Jersey 08012 (US)
(74) Representative: Jones, Alan John

(56) References cited:
- EP-A- 0 155 824
- GB-A- 2 084 892
- GB-A- 2 103 507
- US-A- 3 930 987
- US-A- 4 147 613
- US-A- 4 218 307
- US-A- 4 259 212
- US-A- 4 265 787
- US-A- 4 357 265
- US-A- 4 415 439

## Description

The invention is directed to a new catalyst composition based on framework dealuminated faujasitic zeolites, to its preparation and to its use in catalytic cracking.

Naturally occurring and synthetic zeolites have been demonstrated to exhibit catalytic properties for various types of hydrocarbon conversions. Certain zeolites are ordered porous crystalline aluminosilicates having definite crystalline structure as determined by x-ray diffraction. Such zeolites have pores of uniform size which are uniquely determined by the structure of the crystal. The zeolites are referred to as "molecular sieves" because the uniform pore size of the zeolite material allows it to selectively sorb molecules of certain dimensions and shapes. They possess a framework based on an infinitely extending three-dimensional network of AlO₄ and SiO₄ tetrahedra linked to each other by sharing all of the oxygen atoms. They are conventionally represented by the empirical formula

M_{2/n}O.Al₂O₃.xSiO₂.yH₂O

in which M is a cation of valence n, x is at least 2 and y can be from zero to fifty or more depending on degree of dehydration.

The state of the art includes a variety of synthetic zeolites, designated by letter or other convenient symbols, as illustrated by zeolite A (US-A-2,882,243); zeolite X (US-A-2,882,244); zeolite Y (US-A-3,130,007); zeolite ZK-5 (US-A-3,247,195) ; zeolite ZK-4 (US-A-3,314,752) ; zeolite ZSM-11 (US-A-3,709,979) and zeolite ZSM-23 (US-A-4,076,842), merely to name a few.

The particular faujasitic or Y-type zeolite utilized in this invention has come to be known as ultrastable Y (USY) and is sometimes referred to as dealuminated Y (DAY). References describing the nature and methods of preparation of USY or DAY include:
1. Maher, P. K., US-A-3,293,192.
2. Kerr, G. T., J. Phys. Chem., 71:4155 (1967).
3. McDaniel, C. V., US-A-3,607,403.
4. Maher, P. K., US-A-3,402,996.
5. Scherzer, J., "The Preparation and Characterization of Aluminum Deficient Zeolites", ACS Symposium Series, Paper No. 10, June 13-16, 1986, pp. 157-200.

It is clear from these references, and other scientific and patent literature, that USY is not a single entity but a family of materials related to zeolite Y. USY is similar to zeolite Y in that its characteristic x-ray diffraction lines are substantially those of zeolite Y as detailed in the above referenced US specifications. USY differs from as-synthesized zeolite Y in that, by the nature of the various processing schemes and the degree to which zeolite Y is dealuminated, the effective framework silica-to-alumina ratio is increased. One measure of this change is reflected in the measurement of unit cell size of the resultant zeolite, usually reported in the atomic unit, Angstroms (A). As aluminum is removed from the zeolitic framework, hence causing the zeolitic framework silica-to-alumina ratio to increase, the unit cell size decreases. This results because of differences in bond distances between AlO₄ tetrahedra.

US-A-4,218,307 discloses preparation of a cracking catalyst including the steps of rare earth exchange, calcination, dealuminisation and further rare earth, or magnesium exchange.

EP-A-155,824 discloses preparation of a cracking catalyst by spray-drying a mixture of zeolite, siliceous oxide and alumina, and subsequently rare-earth exchanging the resulting composite.

US-A-4,218,307 discloses a cracking catalyst comprising a zeolite, a matrix and alumina which should be substantially free of rare earths.

US-A-4,309,280 suggests the use of crystalline zeolites in hydrocarbon conversion processes. Specific processes relating to the cracking of gas oils to produce motor fuels have been extensively described, for example in US-A-3,140,249, -3,140,251, -3,140,252, -3,140,253 and -3,271,418. In several of the above identified specification the combination of zeolites with a matrix for use in catalytic cracking is suggested.

Other references disclose the use of USY or DAY to crack alkanes. For example, A. Corma, et al., in APPLIED CATALYSIS, Vol. 12 (1984), pp. 105-116, present a "Comparison of the Activity , Selectivity and Decay Properties of LaY and HY Ultrastable Zeolites During the Cracking of Alkanes". Pine, L. A., et. al., in the JOURNAL OF CATALYSIS, Vol. 85 (1984), pp. 466-476 present data to support the "prediction of Cracking Catalyst Behavior by a Zeolite Unit Cell Size Model". The performance of cracking catalysts containing USY or DAY is often compared to catalysts containing zeolite Y which has not been intentionally dealuminated. Because of the deleterious effect of sodium on the performance of cracking catalysts, USY or DAY catalysts are frequently compared with catalysts containing the hydrogen form of Y zeolite (HY) or the rare earth form of Y zeolite (REY).

In general the patent and scientific literature suggests the following for cracking catalysts containing USY or DAY, containing substantially no rare earth, at constant conversion relative to REY-containing cracking catalyst:
1. significant increases in gasoline research and motor octane (unleaded);
2. significant decreases in coke make;
3. definitive increases in total C₃ + C₄ make, particularly C₃ olefins and C₄ olefins;
4. reductions in gasoline yield.

Furthermore, lower catalytic activity is evidenced with decreasing unit cell size of the Y zeolite component. Hence a non-rare earth containing USY or DAY zeolite would exhibit lower activity/stability than a non-dealuminated REY zeolite because the former has a lower U.C.S. both as manufactured and subsequent to equilibration in a conventional cracking unit.

When rare earth components are introduced into these USY or DAY containing catalysts (RE-USY), irrespective of whether they are pre-exchanged onto the zeolite or post-exchanged onto the catalyst, the increases in gasoline research and motor octane (unleaded), the increases in C₃ and C₄ production and the decreases in coke make are diminished in proportion to the amount of rare earth added (GB-A-2084892). Furthermore lower catalytic activity for the RE-USY is still evidenced relative to non-dealuminated REY.

The catalyst of the present invention as disclosed below performs in a significantly different manner which was not foreseeable.

According to the invention wording of claim 1. Advantageously from 1 to 80 weight percent of the matrix is a weighting agent and/or a densifying agent selected from alumina (corundum), TiO₂, ZrO₂ and clays. The composition may optionally further comprise 0.01 to 1 pbw chromium expressed as Cr₂O₃, and in a desirable embodiment it may further comprise 1 to 5000 ppm by weight of at least one noble metal and/or rhenium. Preferably its alkali metal content is 0.0001 to 1.0 weight percent.

The silica-alumina molar ratio of the framework dealuminated zeolite Y is suitably from 5 to 100, and preferably the zeolite is in the hydrogen, rare-earth or ammonium exchanged form. The rare earth is suitably lanthanum, cerium or mixtures thereof and/or any element of the lanthanide series of the periodic chart of elements, whilst the matrix is advantageously SiO₂, Al₂O₃, SiO₂-Al₂O₃, TiO₂, ZrO₂ and/or clay. The unit cell size, as determined by x-ray diffraction, of the zeolite in the finished catalyst is typically from 2.425 to 2.455 nm. The composition may, if desired, further comprise a zeolite having a constraint index of 1 to 12.

The process for making the catalytic cracking composition according to claim 1 comprises compositing a framework dealuminated Y-type zeolite and a matrix to form a composite in which the zeolite is dispersed, treating the composite with a source of aluminum and rare earth compounds whereby said aluminum and rare earth compounds are exchanged and optionally impregnated into said composite, and drying said composite, advantageously in the presence of 1 to 100 volume percent steam. The composite may thereafter be calcined at at least 204° C, optionally in the presence of 1 to 100 volume percent steam. In certain favoured embodiments a source of chromium, and/or rhenium is added to the composite.

The invention further comprehends a catalytic cracking process which comprises contacting a cracking feedstock the major components of which boil above 316° C, under catalytic cracking conditions, with the aforesaid catalyst. The feedstock suitably comprises at least 50% wt. atmospheric resid, and the process may be carried out in a fluidised-bed or in a moving-bed unit, examples of the latter being a Thermofor or a Houdriflow unit. There result higher gasoline and distillate yields while minimizing the production of coke and C₄ and lighter gases at lower catalyst usages per barrel of feed by virtue of its superior hydrothermal stability.

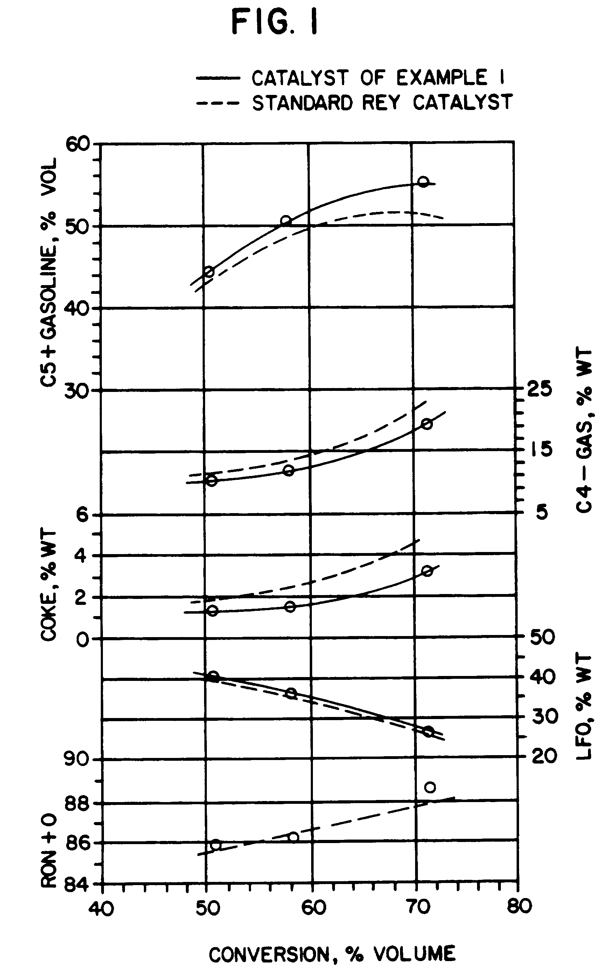

Figure 1 illustrates the change in selectivity and gasoline octane, wherein the gasoline yield, C₄ and lighter gases, coke, light fuel oil and gasoline research octane clear are plotted against the volume percent conversion of a gas oil to gasoline, lighter components and coke for the catalyst of the present invention and compared with the results obtained under identical conditions for a conventional REY cracking catalyst.

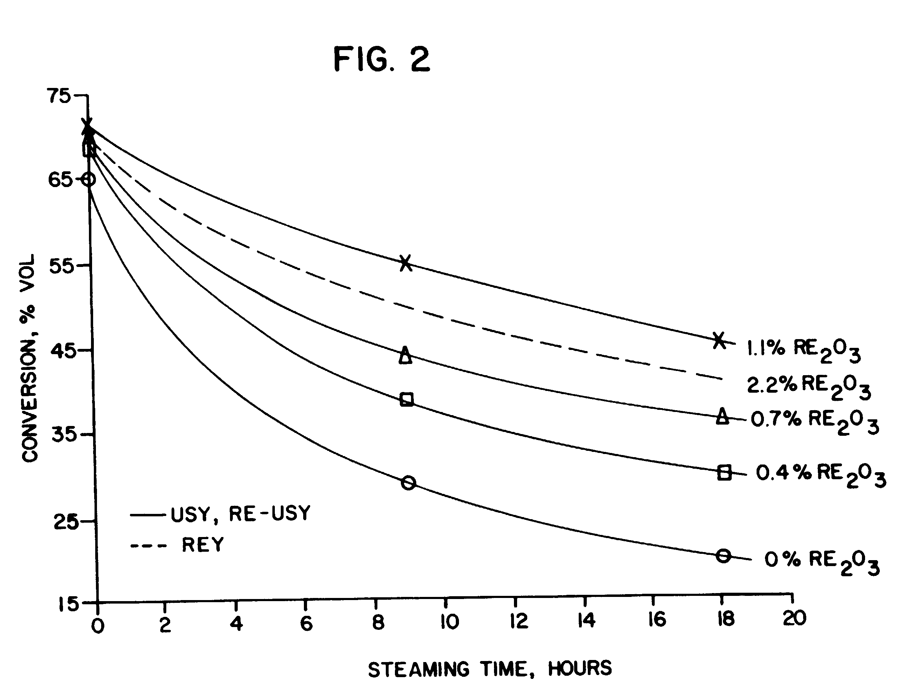

Figure 2 shows the effect of rare earth level on the hydrothermal stability of the catalyst of the present invention, wherein volume percent conversion of a gas oil to gasoline, lighter components and coke is shown as a function of increasingly severe hydrothermal deactivation, at various rare earth contents.

The major conventional cracking catalysts presently in use generally incorporate a large pore crystalline aluminosilicate zeolite into a suitable matrix component which may or may not itself possess catalytic activity. These zeolites typically possess an average crystallographic pore dimension of about 7 angstroms and above for their major pore opening. Representative crystalline aluminosilicate zeolite cracking catalysts of this type include the zeolites hereinabove referenced, as well as naturally occurring zeolites such as faujasite, mordenite, and the like. Also useful are silicon-substituted zeolites described in US-A-4,503,023 zeolite Beta (US-A-3,308,069) and the silicoaluminophosphates and metal aluminophosphates of US-A-4,440,871 and 4,567,029 respectively.

The crystalline zeolites are ordinarily ion exchanged either separately or in the final catalyst with a desired cation to replace alkali metal present in the zeolite. The exchange treatment is advantageously such as to reduce the alkali metal content of the final catalyst to less than about 1.5 weight percent and preferably less than about 1.0 weight percent. The purpose of ion exchange is to substantially remove alkali metal cations which are known to be deleterious to cracking, as well as to introduce particularly desired catalytic activity by means of the various cations used in the exchange medium. For the cracking operation described herein, preferred cations are hydrogen, ammonium, rare earth and mixtures thereof. Ion exchange is suitably accomplished by conventional contact of the zeolite with a suitable salt solution of the desired cation such as, for example, the sulfate, chloride or nitrate.

The framework dealuminated faujasitic zeolites suitable for use in the present invention are modified in activity by dilution with a matrix component of significant or little catalytic activity. It may be one providing a synergistic effect as by large molecule cracking, large pore material and act as a coke sink. Catalytically active inorganic oxide matrix material is particularly desired because of its porosity, attrition resistance and stability under the cracking reactive conditions encountered particularly in a catalyst cracking operation. Catalysts of the present invention are readily prepared by dispersing the zeolitic component in a suitable siliceous sol and gelling the sol by various means.

The inorganic oxide which serves as matrix in which the above crystalline zeolite is distributed includes silica gel or a cogel of silica and a suitable metal oxide. Representative cogels include silica-alumina, silicamagnesia, silica-zirconia, silica-thoria, silica-beryllia, silica-titania, as well as ternary combinations such as silica-alumina-magnesia, silica-alumina-zirconia and silica-magnesia-zirconia. Preferred cogels include silica-alumina, silica-zirconia or silica-alumina-zirconia. Particularly preferred is a silica-alumina cogel. The above gels and cogels will generally comprise a major proportion of silica and a minor proportion of the aforementioned oxide or oxides.

Preferably the amount of framework dealuminated faujasitic zeolites in the disclosed catalyst compositions ranges from 5 to 45 weight percent based on the total weight of the composition; and, most preferably they range from 5 to 40 weight percent. Correspondingly, the amount of matrix will vary from 55 to 95 weight percent, based on total weight of said composition; most preferably said matrix will vary from 60 to 95 weight percent.

Another important aspect of the catalysts of the present invention is the presence of aluminum compounds, provided by incorporation into said composite via ion exchange, and optionally impregnation by techniques known to those skilled in the art as incipient wetness impregnation, ion exchange, merely to name a few pertinent techniques. The amount of alumina incorporated can range from 0.01 to 15 weight percent, based on total weight of said composition; preferably, the alumina can very from 0.01 to 10 weight percent; most preferably, it can vary from 0.01 to 7 weight percent.

Yet another important aspect of the catalysts of the present invention is the presence of rare earth compounds, provided by incorporation into said composite via ion exchange, and optionally impregnation by techniques known to those skilled in the art as incipient wetness impregnation, ion exchange, merely to name a few pertinent techniques. The amount of rare earth incorporated can range from 0.01 to 10 weight percent, expressed as trivalent oxides of same, based on the total weight of said composition; preferably, the rare earth content can vary from 0.01 to 6 weight percent; most prefarably, it can vary from 0.01 to 4 weight percent.

In a preferred embodiment the catalyst compositions allow that the inorganic oxide matrix may be combined with a raw or natural clay, a calcined clay, or a clay which has been chemically treated with an acid or an alkali medium or both. Preferred clays are those belonging to the family of clay commonly known as kaolin, bentonite, montmorillonite or halloysite. Alternately or in addition the inorganic oxide matrix may be combined with weighting or densifying agents including, for example, alumina (corundum), magnesia, beryllia, barium oxide, zirconia and/or titania.

A recent advance in the art of catalytic cracking is disclosed in US-A-4,072,600, which teaches that trace amounts of a metal selected from the group consisting of platinum, palladium, iridium, osmium, rhodium, ruthenium, and rhenium when added to cracking catalysts enhances significantly conversion of carbon monoxide during the catalyst regeneration operation.

In employing this recent advance to the present invention, the amount of said metal added to the catalysts of the present invention can vary from between about .01 ppm and about 100 ppm based on total catalyst inventory; preferably, 0.01 to 50 ppm by weight; most preferably, 0.01 to 5 ppm by weight.

In yet another preferred embodiment the catalyst compositions herein disclosed can include chromium. The methods of incorporation of chromium are substantially the same as those disclosed heretofore for both the aluminum and rare earth compounds. The amount of chromium incorporated, expressed as Cr₂O₃, based on the total weight of said composition, can vary from 0.01 to 1 weight percent chromium; preferably, 0.01 to 0.5 weight percent; most preferably 0.01 to 0.3 weight percent.

In accordance with the invention, the catalyst can be used alone or in combination with a zeolite having a Constraint Index of 1 to 12. One such zeolite is ZSM-5 (US-A-3,702,886); if the Constraint Index of ZSM-5 is measured at different temperatures, but within the bounds of the limits of conversion set forth below, it is found to vary but remains within the range of 1 to 12 (cf. Frilette et al., "Catalysis by Crystalline Aluminosilicates: Characterization of Intermediate Pore-size Zeolites by 'Constraint Index'", Journal of Catalysis, Vol. 67, No. 1, January 1981, pp. 218-221). For the purposes of the present specification a zeolite is regarded as having a Constraint Index of 1 to 12 if any test performed within the conditions prescribed in the reference referred to immediately above yields a value within that range even though other tests may not.

The catalyst compositions of the present invention can be used in catalytic cracking processes. Constant conversion comparisons, relative to conventional REY cracking catalysts, reveal that the new catalyst compositions disclosed herein yield:
1) significant increases in gasoline volume without significant increases in research or motor octane (clear). This is in marked contrast to what has been claimed for prior art USY or DAY containing cracking catalysts. Prior art USY or DAY containing cracking catalysts, which are substantially free of rare earth elements, are characterised by their ability to significantly increase the research and motor octane of gasoline produced from catalytic cracking albeit at a yield penalty.
2) significant reductions in C₄ and lighter gas make. This also is directly opposite to what has been claimed for prior art USY or DAY cracking catalysts.
3) significant reductions in coke make. This feature is associated with prior art USY or DAY cracking catalysts provided that they are substantially free of rare earth elements. By contrast the desirable feature of low coke make is evident at all levels of rare earth content for the catalyst compositions of this invention, the opposite being true for prior art USY or DAY cracking catalysts.
4) significant increases in the amount of the more desirable hydrocarbon fraction known as light fuel oil concomitant with reductions in the amount of the less desirable hydrocarbon fraction known as heavy fuel oil.

The desirable features associated with the use of the present catalysts in catalytic cracking are graphically shown in Figure 1 which is discussed above. The benefits derivable from use of the present catalysts in catalytic cracking are further described in the examples given below.

Another significant feature of the catalysts of the present invention, which renders them particularly useful in catalytic cracking processes, is their catalytic activity/stability relative to state-of-the-art REY, USY and RE-USY containing cracking catalysts. As can be seen graphically in Figure 2 and further in the examples given below catalytic activity increases and hydrothermal stability improves as rare earth content increases. Furthermore it can be seen that at certain rare earth loadings the catalysts of the present invention exhibit superior activity and hydrothermal stability relative to conventional REY cracking catalysts. Hence certain catalysts of the present invention will require lower usage per barrel of fuel relative to commercial cracking catalysts currently in use.

Hydrocarbon charge stocks undergoing cracking in accordance with this invention comprise hydrocarbons generally and, in particular, petroleum fractions having an initial boiling range of at least 400°F (204°C), a 50% point range of at least 500°F (260°C) and an end point range of at least 600°F (316°C). Such hydrocarbon fractions include gas oils, residual oils, cycle stocks, whole top crudes and heavy hydrocarbon fractions derived by the destructive hydrogenation of coal, tar, pitches, asphalts and the like. As will be recognized, the distillation of higher boiling petroleum fractions above about 750°F (399°C) must be carried out under vacuum in order to avoid thermal cracking. The boiling temperatures utilized herein are expressed in terms of convenience of the boiling point corrected to atmospheric pressure.

Catalytic cracking, in which the catalysts of the invention are employed, embraces operational conditions including temperature ranges of about 400°F (204°C) to 1200°F (649°C) and reduced, atmospheric or super atmospheric pressures. The catalytic cracking process may be operated batchwise or continuously. The catalytic cracking process can be either fixed bed, moving bed or fluidized bed. The hydrocarbon chargestock flow may be either concurrent or countercurrent to the catalyst flow. The process of the invention is applicable to fluid catalytic cracking (FCC) processes. Briefly, in the FCC process, the catalyst is in the form of microspheres, which act as a fluid when suspended in oil, vapor or gas. The hydrocarbons contact the fluidized catalysts and are catalytically cracked to lighter products. Deactivation of the catalyst by coke necessitates regeneration of the coked catalyst in the regenerator of an FCC unit. Although the design and construction of individual FCC units can vary, the essential elements of a typical FCC unit are illustrated in US-A-4,386,114.

The process of the invention is also directed to moving bed catalytic cracking units having moving bed catalyst regeneration units associated therewith. Thermofor (Tradename) catalytic cracking (TCC) and Houdriflow (Tradename) catalytic cracking are representative of such moving bed cracking and moving bed regeneration units. The catalyst is generally maintained as a down flowing moving bed of catalyst. The catalysts may be disposed in an annular bed, with radial, in or out, gas flow. The moving catalyst bed may have the cross section of a circle or a rectangle with gas flow from the lower portion of the catalyst bed to the upper or the reverse. Alternatively, gas flow may be across the moving bed of catalyst, or some combination of cross-flow, downflow and upflow. Generally, although the catalyst from the moving bed of a catalytic cracking unit is usually stripped before being sent to the regenerator, there is usually a small amount of hydrocarbon, and hydrogen-containing coke, on the catalyst. This material is relatively easy to burn, and is usually burned from the catalyst in the top 5 to 10% of the moving bed catalyst regeneration unit. Usually more severe conditions are necessary to completely remove the more refractive, relatively hydrogen-free coke that remains on the catalyst after hydrocarbons are burned off, so progressively more severe operating conditions are experienced in the lower portions of the moving bed. These conditions may be increased temperature, increased oxygen concentration, or both.

After cracking, the resulting product gas is compressed and the resulting products may suitably be separated from the remaining components by conventional means such as adsorption, distillation, etc.

The following Examples illustrate the invention.

### Example 1

Two solutions were prepared; Solution A contained 41.67 parts sodium silicate (SiO₂/Na₂O ratio of 3.22), 3.00 parts Davison Z-14US ultrastable Y zeolite (USY), 9.26 parts alpha-alumina (corundum), 1.92 parts NaOH, and 40.93 parts H₂O. Solution B contained 3.47 parts Al₂SO₄)₃, 5.87 parts H₂SO₄, and 90.66 parts H₂O. These two solutions were cooled to 60°F (15.6°C) combined by mixing through a nozzle such that the pH was maintained at 8.4 plus or minus 0.2. The resultant mixture was passed through a 5 foot (1.524 m) column of oil at room temperature during which time the combined solutions formed spherical particles less than 1/2 inch (12.7 mm) in diameter and gelled prior to contact with water. These rigid particles were then separated from and washed essentially free of residual oil. The particles were then contacted with a solution of 1.5% wt Al₂(SO₄)₃ for a total of 18 hours, using new solution every two hours and subsequently washed until no sulfate could be detected in the effluent by testing with barium chloride solution. Next they were contacted with a solution containing 0.75% wt RECl₃.6H₂O (Rare Earth Chloride, Code 1433, manufactured by Davison Specialty Chemical Co.) for a period of 6 hours and washed with water until no residual chloride could be detected in the effluent by testing with silver nitrate solution. The catalyst was placed in slotted trays and dried in an approximately 100% steam atmosphere to a final temperature of 320°F (160°C) for a minimum of 15 minutes. The catalyst was further subjected to steam calcination or tempering for 12 hours at 1290°F (699°C) in approximately 95% steam/5% air at atmospheric pressure. Physical and chemical properties of the catalyst are shown in Table 1, along with the properties of two commercial REY catalysts designated as Catalyst A and Catalyst B.

**Table 1**

| | Example 1 | Catalyst A | Catalyst B |
|---|---|---|---|
| Chemical | | | |
| Silica, % wt | 57.0 | 50.5 | 48.8 |
| Alumina, % wt | 42.0 | 42.8 | 40.4 |
| RE₂O₃, % wt | 1.08 | 2.20 | 2.90 |
| Na, % wt | 0.13 | 0.16 | 0.40 |
| Ash, % wt @ 1000°C | 98.3 | 97.2 | 96.9 |

| Physical | | | |
|---|---|---|---|
| Surface Area, m/g | 132 | 165 | 149 |
| Real Density, g/cc | 2.73 | 2.77 | ND |
| Particle Density, g/cc | 1.32 | 1.37 | ND |
| Pore Volume, cc/g | 0.39 | 0.36 | ND |
| Avg. Pore Diameter, nm | 11.8 | 8.9 | ND |

| Diffusivity, | | | |
|---|---|---|---|
| cm/sec x 1000 | 31 | 20 | ND |
| Unit Cell Size, nm | 2.442 | 2.462 | ND |
| ND = Not Determined | | | |

### Example 2

The catalyst of Example 1 was evaluated cracking Mid-Continent Pipeline Gas Oil (MCPLGO) in a fixed bed reactor. Vapors of the gas oil are passed through the catalyst at 925°F (496°C) substantially at atmospheric pressure at a feed rate of 3 volumes of liquid oil per volume of catalyst per hour for 10 minutes. The method of measuring the instant catalyst was to compare the various product yields obtained with such catalyst with yields of the same products given by a commercial REY catalyst. The differences (Delta values) shown hereinafter represent the yields given by the present catalyst minus yields given by the REY catalyst. In addition, samples were steam deactivated for 9 and 18 hours in a 100% steam atmosphere at 1300°F (704.5°C) and 40 psig (3.77 bar) prior to catalytic evaluation. The results are presented graphically in Figure 1 and at constant 60 volume percent conversion in Table 2. As is readily apparent, the catalyst of the present invention yields, at constant conversion, significantly more gasoline and light fuel oil while reducing coke and C₄- gas yields.

**Table 2**

| Mid-Continent Gas Oil 60 vol % Conversion | REY | EXAMPLE 1 DELTA |
|---|---|---|
| C₅+ Gasoline, % vol | 48.8 | +2.7 |
| Total C₄'s, % vol | 12.5 | -0.9 |
| C₃- Gas, % wt | 6.2 | -0.7 |
| Coke, % wt | 2.9 | -1.1 |
| | | |
| LFO, % wt | 33.7 | +1.1 |
| HFO, % wt | 7.4 | -1.0 |
| Potential Alkylate, % vol | 14.9 | +1.4 |
| G+D+PA, % vol | 97.4 | +5.2 |

### Example 3

To study the contribution of the aluminum exchange on the catalyst, two catalysts were prepared by the technique described in Example 1, except that one sample was treated for 24 hours in NH₄OH followed by nine 2-hour exchanges with 2% wt (NH₄)₂SO₄ rather than 1.5% wt Al₂(SO₄)₃. Both catalysts were then washed sulfate free and dried without rare earth exchange, followed by steam tempering as in Example 1. The chemical/physical properties are listed in Table 3. These catalysts were steam deactivated for 9 hours in a 100% steam atmosphere at 1300°F (704°C) and 40 psig (3.77 bar) and tested catalytically at the same conditions stated in Example 2; the results are reported in Table 4. The catalyst of the present invention shows higher initial activity, and better retention of activity after steaming.

**Table 3**

| Exchange Solution | Aluminum | Ammonium |
|---|---|---|
| Chemical | | |
| Silica, % wt | 52.0 | 53.5 |
| Alumina, % wt | 45.2 | 44.4 |
| RE₂O₃, % wt | 0 | 0 |
| Na, % wt | 0.29 | 0.35 |
| Ash, % wt @ 1000°C | 98.9 | 98.7 |

| Physical | | |
|---|---|---|
| Surface Area, m/g | 138 | 155 |
| Real Density, g/cc | 2.77 | 2.77 |
| Particle Density, g/cc | 1.22 | 1.01 |
| Pore Volume, cc/g | 0.46 | 0.63 |
| Avg. Pore Diameter, nm | 13.3 | 16.4 |
| Diffusivity, cm/sec x 1000 | 64 | 59 |
| Unit Cell Size, nm | 2.433 | 2.436 |

**Table 4**

| | Unsteamed | | Steamed | |
|---|---|---|---|---|
| | Alum | NH₄ | Alum | NH₄ |
| | | | | |
| Conversion, % vol | 64.9 | 50.9 | 29.0 | 18.3 |
| C₅+ Gasoline, % vol | 51.7 | 43.7 | 26.5 | 17.7 |
| Total C₄, % vol | 15.5 | 9.1 | 3.8 | 1.2 |
| C₃- Gas, % wt | 7.0 | 4.9 | 2.6 | 1.8 |
| Coke, % wt | 1.91 | 1.58 | 0.95 | 0.91 |
| | | | | |
| Alkylate, % vol | 22.7 | 14.6 | 7.7 | 3.2 |
| C₅+ Gasoline+Alkylate, % vol | 74.4 | 58.3 | 34.2 | 20.8 |
| | | | | |
| RON+0, C₅+ Gasoline | 88.5 | 85.8 | 87.5 | 86.4 |
| RON+0, C₅+ Gasoline+Alkylate | 90.2 | 87.9 | 89.0 | 87.6 |
| | | | | |
| LFO, % wt | 32.2 | 41.1 | 52.7 | 56.8 |
| HFO, % wt | 4.5 | 8.9 | 18.1 | 24.2 |
| G+D, % wt | 76.3 | 78.6 | 75.8 | 72.3 |
| | | | | |

### Example 4

To study the contribution of rare earth on catalytic performance, catalysts were prepared at increasing levels of rare earth. The chemical/physical properties are listed in Table 5. The results of catalytic evaluations are given in Table 6. In addition, the catalysts' hydrothermal stability was evaluated by deactivating the catalysts from 9 and 18 hours in a 100% steam atmosphere at 1300°F (704.5°C) and 40 psig (3.77 bar) prior to catalytic evaluation. The results are shown in Figure 2. As is readily apparent, the importance of sufficient rare earth on the final catalyst is seen in the effect on hydrothermal stability. Hydrothermal stability is improved with increasing rare earth content. It is further seen that the activity/stability of the catalyst of this invention at sufficiently high rare earth levels exceeds that of a conventional non-dealuminated REY catalyst.

**Table 5**

| Chemical | | | | |
|---|---|---|---|---|
| Silica, % wt | 52.0 | 52.0 | 52.0 | 51.0 |
| Alumina, % wt | 45.2 | 44.8 | 44.8 | 44.0 |
| RE₂O₃, % wt | 0 | 0.4 | 0.7 | 1.1 |
| Na, % wt | .10 | .12 | .13 | .14 |
| Ash, % wt @ 1000°C | 98.9 | 98.9 | 99.2 | 98.5 |

| Physical | | | | |
|---|---|---|---|---|
| Surface Area, m/g | 138 | 141 | 145 | 148 |
| Real Density, g/cc | 2.77 | 2.77 | 2.78 | 1.79 |
| Particle Density, g/cc | 1.22 | 1.25 | 1.20 | 1.22 |
| Pore Volume, cc/g | 0.45 | 0.44 | 0.47 | 0.46 |
| Avg. Pore Diameter, nm | 13.3 | 12.5 | 13.0 | 12.8 |
| | | | | |
| Diffusivity, cm/sec x 1000 | 64 | 69 | 68 | 66 |
| Unit Cell Size, nm | 2.433 | 2.435 | 2.441 | 2.438 |

**Table 6**

| | | | | |
|---|---|---|---|---|
| Rare Earth Level, % wt | 0 | 0.4 | 0.7 | 1.1 |
| | | | | |
| Conversion, % vol | 64.9 | 68.4 | 70.2 | 71.4 |
| C₅+ Gasoline, % vol | 51.7 | 55.8 | 57.4 | 57.7 |
| Total C₄, % vol | 15.5 | 14.8 | 14.7 | 15.4 |
| C₃- Gas, % wt | 7.0 | 7.3 | 7.5 | 7.6 |
| Coke, % wt | 1.91 | 2.10 | 2.36 | 2.39 |
| | | | | |
| Alkylate, % vol | 22.7 | 21.1 | 21.2 | 21.3 |
| C₅+ Gasoline+Alkylate, % vol | 74.4 | 76.9 | 78.6 | 79.0 |
| | | | | |
| RON+0, C₅+ Gasoline | 88.5 | 86.1 | 86.4 | 86.1 |
| RON+0, C₅+ Gasoline+Alkylate | 90.2 | 88.3 | 88.5 | 88.2 |
| | | | | |
| LFO, % wt | 32.2 | 29.6 | 28.2 | 27.3 |
| HFO, % wt | 4.5 | 3.8 | 3.5 | 3.3 |
| G+D, % wt | 76.3 | 77.0 | 76.9 | 76.5 |

### Example 5

To see if this catalyst was chargestock specific, the catalyst of Example 1 was evaluated cracking two additional type crudes. The results of this evaluation are given in Table 7. In all cases, the catalyst of the present invention shows improved liquid yields at the expense of gas and coke. As can be seen from the properties in Table 8, the heavier the feed, the more effective is the catalyst of this invention.

**Table 7**

| 60 vol % Conversion | Altona Mixed Feed (1) | | Frontignan Gas Oil (2) | |
|---|---|---|---|---|
| | REY | EXAM 1 DELTA | REY | EXAM 1 DELTA |
| | | | | |
| C5+ Gasoline, % vol | 47.5 | +2.4 | 43.2 | +4.2 |
| C5+ Gasoline, RON+0 | 85.4 | -0.9 | 88.5 | -1.5 |
| Total C₄'s, % vol | 13.1 | -1.0 | 11.9 | +0.1 |
| C₃- Gas, % wt | 6.3 | -0.7 | 8.3 | -1.3 |
| Coke, % wt | 2.3 | -1.0 | 5.9 | -2.3 |
| | | | | |
| LFO, % wt | 31.5 | +1.7 | 30.0 | +1.4 |
| HFO, % wt | 10.0 | -1.7 | 11.9 | -1.1 |
| | | | | |
| Potential Alkylate, % vol | 19.7 | +0.4 | 13.8 | +2.2 |
| G+D+PA, % vol | 98.7 | +4.5 | 87.0 | +7.8 |

| | | | | |
|---|---|---|---|---|
| (1) Derived from Gippsland Crude | | | | |
| (2) Derived from Middle East and North African Crudes | | | | |

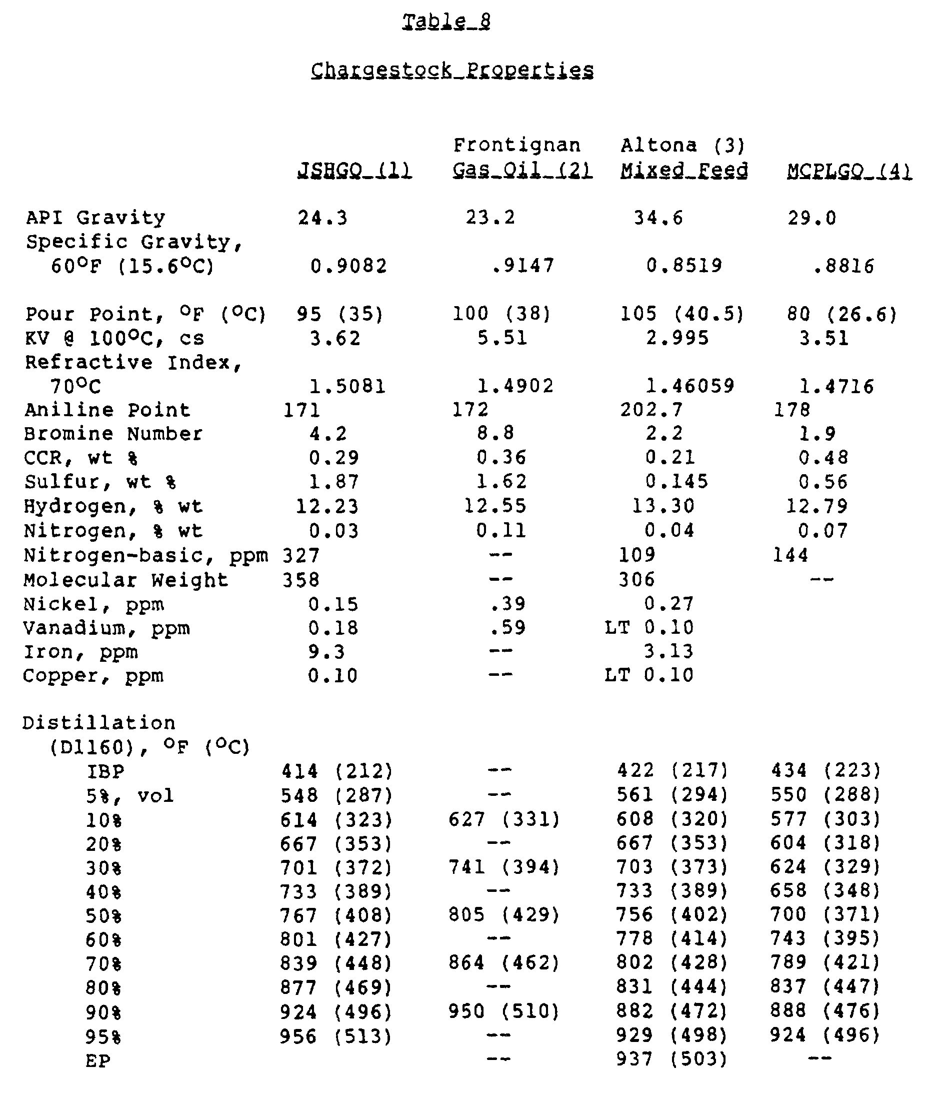

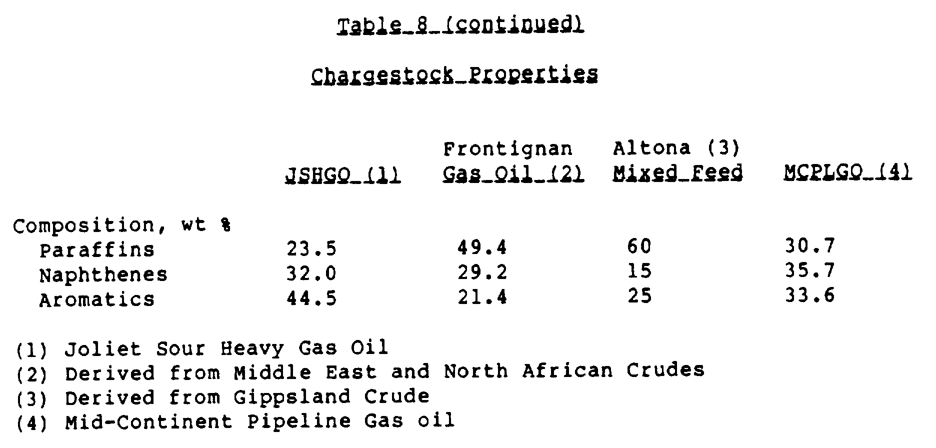

### Example 6

A catalyst was prepared in the identical manner of Example 1, except after the rare earth exchange and final wash, the undried particles were mixed in a high shear mixer with sufficient deionized water to form a pumpable slurry and passed through a homogenizer. The homogeneous slurry was then fed to a spray dryer and particles typical in size to those used in FCC were prepared. This catalyst which contained 12% USY was subsequently steam deactivated at 1450°F (788°C) for 10 hours at 0 psig (1 bar) in a 45% steam/55% air atmosphere. For comparison, a catalyst not of this invention, containing 12% calcined REY, was prepared in a similar manner to this example and also subjected to steam deactivation.

### Example 7

The catalysts prepared in Example 6 were evaluated in a fixed-fluidized bench unit cracking Joliet Sour Heavy Gas Oil (JSHGO) at 960°F (515°C) with a feed rate of 12 to 24 grams of liquid oil per gram of catalyst per hour and a run time of 1 minute The results are shown in Table 9. As can be seen, the catalyst of the present invention results in increased gasoline yield and lower coke and C₄- gas make.

**Table 9**

| | Example 6 | REY |
|---|---|---|
| | | |
| Conversion, % vol | 65.0 | 65.0 |
| C₅+ Gasoline, % vol | 51.2 | 48.4 |
| Total C₄, % vol | 15.5 | 16.0 |
| C₃- Gas, % wt | 7.4 | 8.3 |
| Coke, % wt | 3.26 | 4.00 |
| | | |
| Alkylate, % vol | 24.2 | 24.7 |
| C₅+ Gasoline+Alkylate, % vol | 75.4 | 73.1 |
| | | |
| LFO, % wt | 30.1 | 30.9 |
| HFO, % wt | 7.1 | 6.3 |
| G+D, % wt | 72.3 | 71.2 |

### Example 8

A catalyst of the present invention was prepared according to the procedure of Example 1, except the finished catalyst contained 20% USY vs 12% USY in Example 1. The chemical/physical properties are shown in Table 10. This catalyst also shows the advantage in increased gasoline yield and lower coke and gas over currently available REY catalysts.

**Table 10**

| | |
|---|---|
| Silica, % wt | 66.0 |
| Alumina, % wt | 40.4 |
| RE₂O₃, % wt | 1.42 |
| Na, % wt | 0.17 |
| Ash, % wt @ 1000°C | 99.0 |
| | |
| Surface Area, m/g | 201 |
| Real Density, g/cc | 2.67 |
| Particle Density, g/cc | 1.34 |
| Avg. Pore Diameter, nm | 7.4 |
| | |
| Diffusivity, cm/sec x 1000 | 22 |
| Unit Cell Size, nm | 2.444 |

### Example 9

A catalyst was prepared in the identical manner of Example 1, except that 0.6 parts CrK(SO₄)2.12H₂O was added to solution B prior to mixing with solution A. Analysis of the finished catalyst was essentially the same as in Example 1, with the addition of 0.13% wt Cr. Catalytic evaluation showed identical performance to the catalyst of Example 1.

### Example 10

A catalyst was prepared in the identical manner of Example 1, except that the particles were contacted with a solution containing Pt(NH₃)₄Cl₂ for a period of 1 hour subsequent to the final water wash following the rare earth exchange. Chemical analysis showed approximately 5 ppm Pt on the finished catalyst. Catalytic evaluation showed identical performance to the catalyst of Example 1.

### Example 11

The catalyst of Example 1 was evaluated cracking Gippsland atmospheric resid and compared against a commercial REY catalyst. The results are shown in Table II. As can be seen, the use of the catalyst of the present invention is particularly advantageous when using heavy feedstocks. Significant gains in liquid products are made at the expense of C₄- gases and coke.

**Table 11**

| | REY | EXAM 1 | DELTA |
|---|---|---|---|
| Gippsland Atmospheric Resid ⁽¹⁾ | | | |
| | | | |
| Conversion, % vol | 70.0 | 70.0 | -- |
| C₅+ Gasoline, % vol | 51.2 | 58.3 | +7.1 |
| Total C₄'s, % vol | 17.3 | 14.8 | -2.5 |
| C₃- Gas, % wt | 7.3 | 5.4 | -1.9 |
| Coke, % wt | 5.8 | 3.4 | -2.4 |
| | | | |
| C₃=, % vol | 5.1 | 5.3 | +0.2 |
| C₄=, % vol | 4.4 | 5.4 | +1.0 |
| iC₄, % vol | 9.6 | 7.1 | -2.5 |
| | | | |
| Alkylate, % vol | 15.7 | 17.8 | +2.1 |
| Gasoline + Alkylate, % vol | 66.9 | 76.1 | +9.2 |
| Outside iC₄ Req'd, % vol | 1.6 | 5.4 | +3.8 |

| | | | |
|---|---|---|---|
| ⁽¹⁾ Run Conditions: 875°F (486°C), 4C/O, 1.5 LHSV | | | |

## Claims

1. A catalyst composition comprising 0.01 to 15 weight percent of alumina and 0.01 to 10 weight percent of rare earth's expressed as oxides of the same, the balance of said composition being framework dealuminated zeolite Y and a matrix in the proportion of 1 to 60 weight percent of zeolite to 99 to 40 weight percent of matrix, said alumina having been added as an alumina precursor, said alumina precursor and said rare earth being exchanged and optionally impregnated into the composite of zeolite and matrix.

2. A composition according to claim 1 wherein from 1 to 80 weight percent of the matrix is a weighting agent and/or a densifying agent selected from alumina (corundum), TiO₂, ZrO₂ and clays.

3. A composition according to claim 1 or claim 2 which further comprises 0.01 to 1 pbw chromium, expressed as Cr₂O₃.

4. A composition according to any preceding claim which further comprises 1 to 5000 ppm by weight of at least one noble metal and/or rhenium.

5. A composition according to any preceding claim having an alkali metal content of 0.0001 to 1.0 weight percent.

6. A composition according to any preceding claim wherein the silica-alumina molar ratio of the framework dealuminated zeolite Y is from 5 to 100.

7. A composition according to any preceding claim wherein said zeolite is in the hydrogen, rare-earth or ammonium exchanged form.

8. A composition according to any preceding claim wherein said rare earth is lanthanum, cerium or mixtures thereof and/or any element of the lanthanide series of the periodic chart of elements.

9. A composition according to any preceding claim wherein said matrix is SiO₂, Al₂O₃, SiO₂-Al₂O₃, TiO₂, ZrO₂ and/or clay.

10. A composition according to any preceding claim wherein the unit cell size, as determined by x-ray diffraction, of the zeolite in the finished catalyst is from 2.425 to 2.455 nm.

11. A composition according to any preceding claim which further comprises a zeolite having a constraint index of 1 to 12.

12. A process for making a catalytic cracking composition in accordance with any of claims 1 to 11, comprising compositing a framework dealuminated Y-type zeolite and a matrix to form a composite in which the zeolite is dispersed, treating the composite with a source of aluminum and rare earth compounds whereby said aluminum and rare earth compounds are exchanged and optionally impregnated into said composite, and drying said composite.

13. A process according to claim 12 wherein said composite is dried in the presence of 1 to 100 volume percent steam.

14. A process according to claim 12 or claim 13 wherein said composite is calcined at at least 204°C.

15. A process according to claim 14 wherein the calcination is performed in the presence of 1 to 100 volume percent steam.

16. A process according to any of claims 12 to 15 wherein a source of chromium is added to said composite.

17. A process according to any of claims 12 to 16 wherein a source of at least one noble metal and/or rhenium is added to said composite.

18. A catalytic cracking process which comprises contacting a cracking feedstock the major components of which boil above 316°C, under catalytic cracking conditions, with a catalyst in accordance with any of claims 1 to 11.

19. A process according to claim 18 wherein the feedstock comprises at least 50% wt. atmospheric resid.

20. A process according to claim 18 or claim 19 which is carried out in a fluidised-bed or in a moving-bed unit.

## Patentansprüche

1. Katalysatorzusammensetzung, enthaltend 0,01 bis 15 Gew.-% Aluminiumoxid und 0,01 bis 10 Gew.-% Seltene Erden, ausgedrückt als deren Oxide, wobei das Gleichgewicht der Zusammensetzung entaluminiertes Gerüstzeolith und eine Matrix im Verhältnis von 1 bis 60 Gew.-% Zeolith zu 99 bis 40 Gew.-% Matrix ist, und wobei das Aluminiumoxid als eine Aluminiumoxid-Vorstufe zugesetzt worden ist, und wobei die Aluminiumoxid-Vorstufe und die Seltenen Erden in der Zusammensetzung aus Zeolith und Matrix ausgetauscht und wahlweise durch Imprägnierung aufgebracht sind.

2. Zusammensetzung nach Anspruch 1, in welcher 1 bis 80 Gew.-% der Matrix aus einem Füllmaterial und/oder Verdichtungsmittel bestehen, das ausgewählt ist aus Aluminiumoxid (Korund), TiO₂, ZrO₂, und Tonen.

3. Zusammensetzung nach Anspruch 1 oder 2, die außerdem 0,01 bis 1 Gew.-Teil Chrom, ausgedrückt als Cr₂O₃, enthält.

4. Zusammensetzung nach einem der vorhergehenden Ansprüche, die außerdem 1 bis 5000 Gew.-ppm mindestens eines Edelmetalls und/oder von Rhenium enthält.

5. Zusammensetzung nach einem der vorhergehenden Ansprüche mit einem Alkalimetallgehalt von 0,0001 bis 1,0 Gew.-%.

6. Zusammensetzung nach einem der vorhergehenden Ansprüche, in welcher das Molverhältnis von Siliziumoxid-Aluminiumoxid in dem entaluminierten Gerüstzeolith Y zwischen 5 und 100 liegt.

7. Zusammensetzung nach einem der vorhergehenden Ansprüche, in welcher der Zeolith in der Wasserstoff-, Seltenen Erd- oder Ammonium-getauschten Form vorliegt.

8. Zusammensetzung nach einem der vorhergehenden Ansprüche, in welcher die Seltene Erde Lanthan, Cer oder eine Mischung derselben und/oder irgend ein Element der Lanthanidenreihe des Periodischen Systems der Elemente ist.

9. Zusammensetzung nach einem der vorhergehenden Ansprüche, in welcher die Matrix aus SiO₂, Al₂O₃, SiO₂-Al₂O₃, TiO₂, ZrO₂ und/oder Ton besteht.

10. Zusammensetzung nach einem der vorhergehenden Ansprüche, in welcher die durch Röntgenstrahlbeugung bestimmte Elementarzellgröße des Zeoliths in dem fertigen Katalysator zwischen 2,425 und 2,455 nm liegt.

11. Zusammensetzung nach einem der vorhergehenden Ansprüche, die außerdem einen Zeolith mit einem Beschränkungsindex (constraint index) von 1 bis 12 enthält.

12. Verfahren zur Herstellung einer Krackkatalysatorzusammensetzung in Übereinstimmung mit einem der Ansprüche 1 bis 11, bei welchem Verfahren ein entaluminierter Gerüstzeolith vom Typ Y mit einer Matirx zur Bildung eines kombinierten Produktes vereinigt wird, in dem der Zeolith dispergiert ist, dieses kombinierte Produkt mit einer Quelle für Aluminium- und Seltene Erd-Verbindungen behandelt wird, wodurch diese Aluminium- und Seltenen Erd-Verbindungen in der Zusammensetzung ausgetauscht und wahlweise durch Imprägnierung aufgebracht werden, und das kombinierte Produkt getrocknet wird.

13. Verfahren nach Anspruch 12, bei welchem das kombinierte Produkt in Gegenwart von 1 bis 100 Vol.-% Wasserdampf getrocknet wird.

14. Verfahren nach Anspruch 12 oder 13, bei welchem das kombinierte Produkt bei zumindest 204°C kalziniert wird.

15. Verfahren nach Anspruch 14, bei welchem die Kalzinierung in Gegenwart von 1 bis 100 Vol.-% Wasserdampf vorgenommen wird.

16. Verfahren nach einem der Ansprüche 12 bis 15, bei welchem eine Quelle für Chrom zu diesem kombinierten Produkt zugesetzt wird.

17. Verfahren nach einem der Ansprüche 12 bis 16, bei welchem eine Quelle für zumindest ein Edelmetall und/oder für Rhenium zu diesem kombinierten Produkt zugesetzt wird.

18. Katalytisches Krackverfahren, bei welchem ein Krackausgangsmaterial, dessen Hauptkomponenten oberhalb von 316°C sieden, unter Krackbedingungen mit einem Katalysator nach einem der Ansprüche 1 bis 11 in Kontakt gebracht wird.

19. Verfahren nach Anspruch 18, bei welchem das Ausgangsmaterial zumindest 50 Gew.-% atmosphärischen Rückstand enthält.

20. Verfahren nach Anspruch 18 oder 19, das in einer Wirbelbett- oder Bewegtbetteinheit durchgeführt wird.

## Revendications

1. Une composition catalytique comprenant 0,01 à 15% en poids d'alumine et 0,01 à 10% en poids d'alumine et 0,01 à 10% en poids de terres rares exprimées sous la forme de leurs oxydes, la balance de ladite composition étant de la géolite dont la structure cristalline présente une teneur réduite en aluminium, et une matrice en une proportion de 1 à 60% men poids de zéolite pour 99 à 60% en poids de matrice, ladite alumine ayant été ajoutée sous forme d'un précurseur d'alumine, le précurseur d'alumine et les terres rares étant échangés et éventuellement imprégnés sur le matériau composite formé de zéolite et de matrice.

2. Une composition selon la revendication 1, caractérisée en ce que de 1 à 80% de la matrice sont formés par un agent pondéreux et/ou un agent de densification choisi entre alumine (corindon), TiO₂, ZrO₂ et des argiles.

3. Une composition selon la revendication 1 ou 2, caractérisée en ce qu'elle comprend en outre de 0,01 à 1 partie en poids de chrome, exprimé en Cr₂O₃.

4. Une composition selon l'une quelconque des revendications précédentes, caractérisée en ce qu'elle comprend en outre de 1 à 5 000 ppm en poids d'au moins un métal noble et/ou de rhénium.

5. Une composition selon l'une quelconque des revendications précédentes, caractérisée en ce que sa teneur en métal alcalin est comprise entre 0,0001 et 1,0% en poids.

6. Une composition selon l'une quelconque des revendications précédentes, caractérisée en ce que le rapport molaire silice/alumine dans la zéolite Y, dont la structure cristalline présente une teneur réduite en aluminium, est compris entre 5 et 100.

7. Une composition selon l'une quelconque des revendications précédentes, caractérisée en ce que cette zéolite se trouve sous sa forme protonée, sous forme échangée avec des terres rares ou sous forme échangée par de l'ammonium.

8. Une composition selon l'une quelconque des revendications précédentes, caractérisée en ce que cette terre rare est le lanthane, le cérium ou leur mélange et/ou un élément quelconque de la série des lanthanides de la Classification Périodique des Eléments.

9. Une composition selon l'une quelconque des revendications précédentes, caractérisée en ce que cette matrice est SiO₂, Al₂O₃, SiO₂-Al₂O₃, TiO₂, zrO₂ et/ou une argile.

10. Une composition selon l'une quelconque des revendications précédentes, caractérisée en ce que la dimension cellulaire unitaire, telle que déterminée par diffraction aux rayons X de la zéolite dans le catalyseur fini, est comprise entre 2,425 et 2,455 nm.

11. Une composition selon l'une quelconque des revendications précédentes, caractérisée en ce qu'elle comprend une zéolite dont l'indice de contrainte est compris entre 1 et 12.

12. Un procédé de préparation d'une composition de craquage catalytique selon l'une quelconque des revendications 1 à 11 consistant à associer une zéolite de type Y dont la structure cristalline présente une teneur réduite en aluminium et une matrice pour former un matériau composite dans lequel la zéolite est dispersée, à traiter le matériau composite avec une source de dérivés d'aluminium et de terres rares, de façon que ces dérivés d'aluminium et de terres rares soient échangés et éventuellement imprégnés sur ce matériau composite, et à sécher ce matériau composite.

13. Un procédé selon la revendication 12, caractérisé en ce que ce matériau composite est séché en présence de 1 à 100% en volume de vapeur.

14. Un procédé selon la revendication 12 ou 13, caractérisé en ce que ce composite est calciné au moins à 204°C.

15. Un procédé selon la revendication 14, caractérisé en ce que la calcination est mise en oeuvre en présence de 1 à 100% en volume de vapeur.

16. Un procédé selon l'une quelconque des revendications 12 à 15, caractérisé en ce qu'une source de chrome est ajoutée à ce composite.

17. Un procédé selon l'une quelconque des revendications 12 à 16, caractérisé en ce qu'une source d'au moins un métal noble et/ou de rhénium est ajoutée à ce matériau composite.

18. Un procédé de craquage catalytique qui consiste à mettre une charge de craquage dont les composants majeurs ont un point d'ébullition supérieur à 316°C au contact, dans des conditions de craquage catalytique, avec un catalyseur selon l'une quelconque des revendications 1 à 11.

19. Un procédé selon la revendication 18, caractérisé en ce que la charge comprend au moins 50% en poids de résidus atmosphériques.

20. Un procédé selon l'une quelconque des revendications 18 ou 19, mis en oeuvre dans une unité fonctionnant en lit fluidisé ou en lit mobile.
